# EUROPEAN PATENT APPLICATION

(11) **EP 0 900 699 A2**
(43) Date of publication of application: **10.03.1999**
(21) Application number: 98202662.7
(22) Date of filing: 06.08.1998
(51) Int. Cl.: B60R 16/02

(54) **Modular electric wiring system**

(30) Priority: 08.09.1997 GB 9718898
(71) Applicant: Delphi Automotive Systems Deutschland GmbH, D-42369 Wuppertal (DE)
(72) Inventor: Dahmen, Hans-Peter, 51688 Wipperfürth (DE); Stanitzok, Ewald, 58256 Ennepetal (DE)
(74) Representative: Denton, Michael John

(57) **Abstract**

A modular electric wiring system comprising a substantially rigid portion (12); connector portions (20) formed on the rigid portion; open-sided channels (14) formed in the rigid portion and extending to the connector portions; electric conductors (18) laid in the channels; a plug-in portion (22) including a base plate (24), a control unit (28) mounted on the base plate, and electrical leads (30) including electrical conductors (32) extending between the control unit and connector portions (26) mounted on the base plate and alignable with one or more connector portions on the rigid portion; external electrical leads (42) including electrical conductors (44) and connector portions (50) alignable with one or more connector portions on the rigid portion; and electric contacts (38,48) making an electrical connection between the electrical conductors at the aligned connector portions. Lends itself to at least partial automated assembly of the system.

## Description

### Technical Field

The present invention relates to a modular electric wiring system which has particular application for installation in motor vehicles.

### Background of the Invention

Wiring systems within motor vehicles are becoming more complex as more electrically actuated devices are installed in vehicles. This creates problems with both assembly of the wiring systems and installation in a motor vehicle.

### Summary of the Invention

It is an object of the present invention to overcome the above mentioned problems.

A modular electric wiring system in accordance with the present invention comprising a substantially rigid portion; connector portions formed on the rigid portion; open-sided channels formed in the rigid portion and extending to the connector portions; electric conductors laid in the channels; a plug-in portion including a base plate, a control unit mounted on the base plate, and electrical leads including electrical conductors extending between the control unit and connector portions mounted on the base plate and alignable with one or more connector portions on the rigid portion; external electrical leads including electrical conductors and connector portions alignable with one or more connector portions on the rigid portion; and electric contacts making an electrical connection between the electrical conductors at the aligned connector portions.

The present invention provides a wiring system which lends itself to automated assembly or partial automated assembly, and provides a wiring system which is easier to subsequently install in a motor vehicle.

### Brief Description of the Drawings

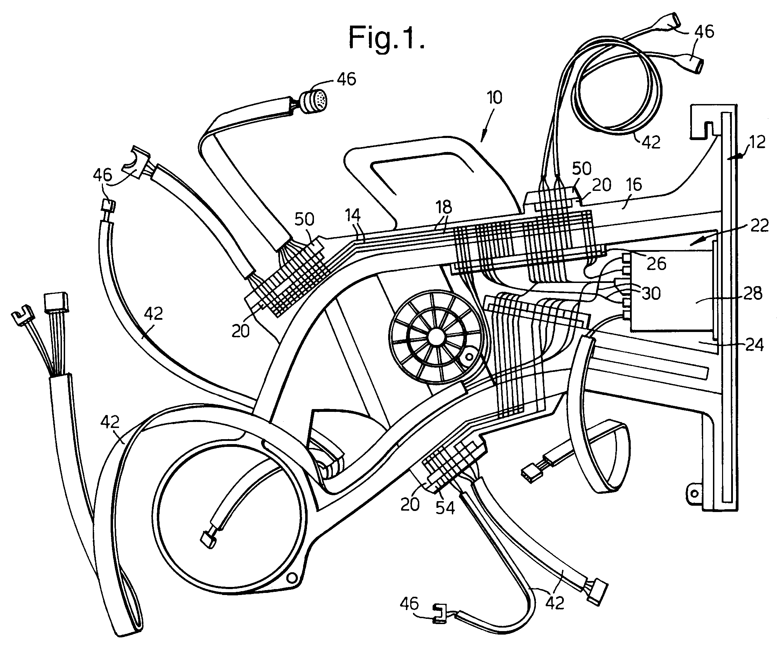

The present invention will now be described, by way of example, with reference to the accompanying drawings, in which:-
Figure 1 is a side view of a modular electric wiring system in accordance with the present invention;

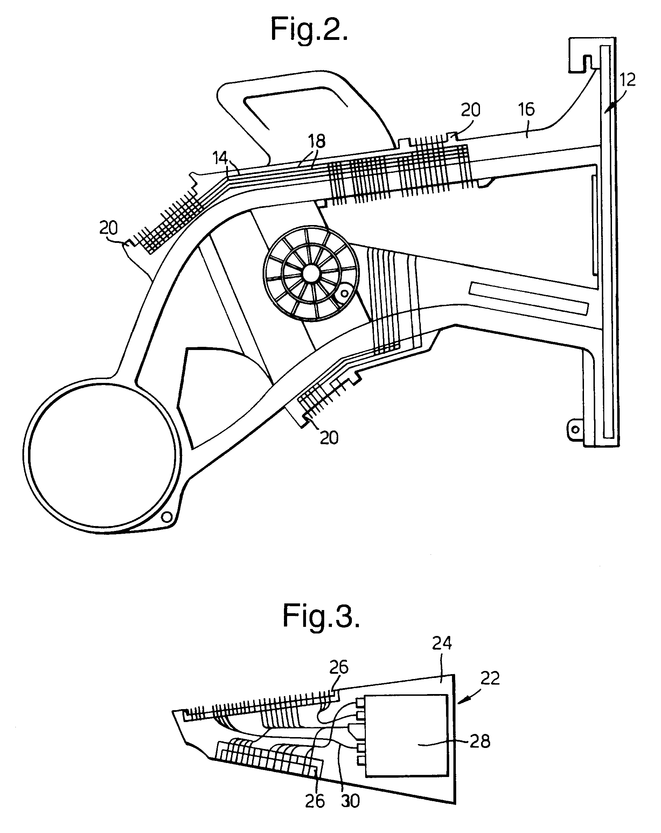

Figure 2 is a side view of the rigid portion of the system of Figure 1;
Figure 3 is a side view of the plug-in portion of the system of Figure 1;

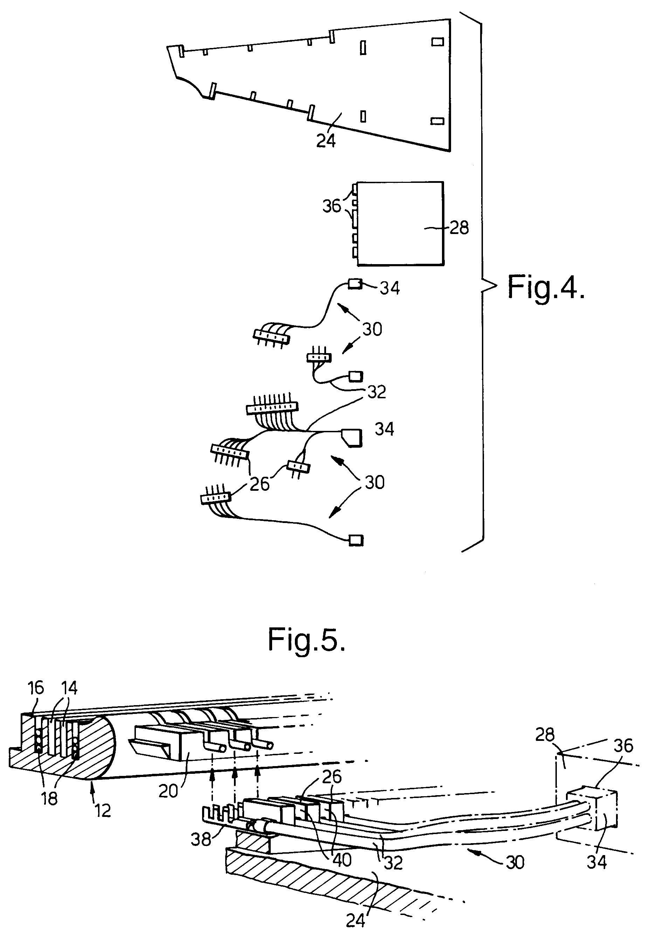

Figure 4 is an exploded view of the plug-in unit of Figure 3;
Figure 5 is a side view, partially in cross-section, of the connecting arrangement between the rigid portion and the plug-in portion of the system of Figure 1;

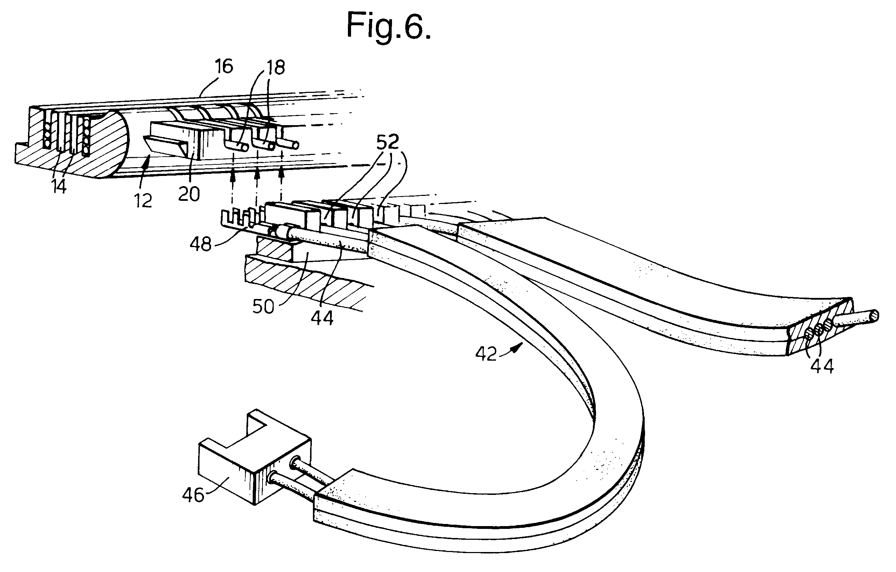

Figure 6 is a side view, partially in cross-section, of the connecting arrangement between the rigid portion and one of the external connecting leads of the system of Figure 1;

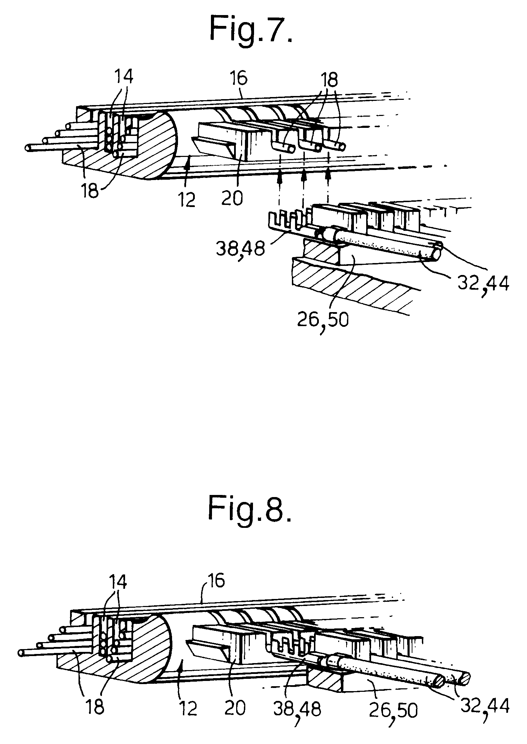

Figure 7 is a side view, partially in cross-section, of the connecting arrangement of Figure 5 or Figure 6 prior to connection;
Figure 8 is a side view, partially in cross-section, of the connecting arrangement of Figure 7 after connection;
Figures 9a to 9c show the steps for connecting the wires at the connecting arrangement of Figure 8; and
Figure 10 is a top view of the connecting arrangement of Figure 8.

### Description of the Preferred Embodiment

Referring to the drawings, the modular electric wiring system 10 in accordance with the present invention comprises a substantially rigid portion 12 which is preferably moulded from plastics material. The rigid portion 12 is shaped for installation as required, and the embodiment shown is for a wiring system for installation in a door of a motor vehicle. The rigid portion 12 has a number of channels 14 formed therein which are open on one side 16 of the rigid portion. The channels 14 form paths for electric conductors or wires 18 which are laid in the channels. The rigid portion 12 also has connector portions 20 formed thereon and the channels 14 extend through the connector portions. The electric conductors 18 are laid in the channels 14 and at least one conductor extends out of one of the channels at the connector portions 20 for connection to other components, as described below. In the case where two or more conductors 18 are placed in a single channel 14, or where the rigid portion 12 is formed from electrically conductive material, each conductor must be covered in a layer of electrically insulating material; for example, enamel or varnish.

The modular electric wiring system 10 further comprises a plug-in portion 22 which is preferably pre-assembled and includes a base plate 24 which is preferably moulded from plastics material. An electronic control unit 28 is mounted on the base plate 24. Connecting leads 30 provide a connection between the control unit 28 and the connector portions 20 on the rigid portion 12. Each connecting lead 30 is preferably pre-assembled and comprises a number of flexible electric conductors or wires 32 which are insulated from one another; an electrical connector 34 at one end for mating with a corresponding electric connector 36 on the control unit 28; electric contacts 38 at the other end which are preferably crimped on the ends of the electric conductors 32; and connector portions 26 which have slots 40 formed therein. Each slot 40 receives one of the electric contacts 38, and each slot can align with one of the channels 14 in one of the connector portions 20 of the rigid portion 12. The connector portions 26 can be secured to the base plate 24 in any suitable manner.

The modular electric wiring system 10 still further comprises a number of external connecting leads 42. Each external connecting lead 42 is preferably pre-assembled and comprises a number of flexible electric conductors or wires 44 which are insulated from one another; an electrical connector 46 at one end for mating with a corresponding electric connector (not shown) on an electrical load (not shown) or a corresponding electrical connector (not shown) connected to a power supply, such as a motor vehicle battery (not shown); electric contacts 48 at the other end which are preferably crimped on the ends of the electric conductors 44; and connector portions 50 which have slots 52 formed therein. Each slot 52 receives one of the electric contacts 48, and each slot can align with one of the channels 14 in one of the connector portions 20 of the rigid portion 12.

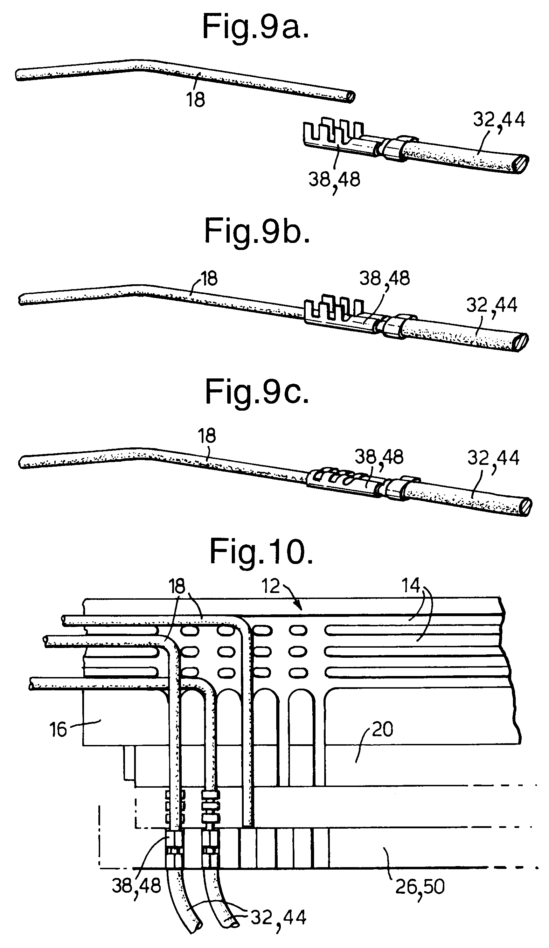

Electrical connection between the conductors 18 in the rigid portion 12 and the conductors 32,44 of the leads 30,42 is illustrated in Figure 9. The contacts 38,48 of the leads 30,42 are brought into engagement with the conductors 18 projecting from the connecting portions 20 of the rigid portion 12 and are electrically connected thereto, preferably by crimping. After connection, plastics material may be moulded around the connecting portions 20,26,50.

The present invention provides a modular electric wiring system which lends itself to automated or semi-automated pre-assembly of the system. The system 10 can be mounted in, for example, a door of a motor vehicle, and can provide leads for power supply to electric loads associated with the door, such a electric door locks, window regulators, etc., operation of which may be controlled by the control unit 28. The system 10 can be pre-assembled for easy installation in the door on the vehicle assembly line.

Other suitable forms of connecting arrangements may be provided between the conductors of the rigid portion and the conductors of the leads of the plug-in portion and the conductors of the external leads. The connecting sequence for the contacts 38,48 may be reversed - that is, the contacts may be connected to the conductors 18 in the rigid portion 12 before being connected to the conductors 32,44 in the plug-in portion 22 or the external leads 42.

## Claims

1. A modular electric wiring system comprising a substantially rigid portion; connector portions formed on the rigid portion; open-sided channels formed in the rigid portion and extending to the connector portions; electric conductors laid in the channels; a plug-in portion including a base plate, a control unit mounted on the base plate, and electrical leads including electrical conductors extending between the control unit and connector portions mounted on the base plate and alignable with one or more connector portions on the rigid portion; external electrical leads including electrical conductors and connector portions alignable with one or more connector portions on the rigid portion; and electric contacts making an electrical connection between the electrical conductors at the aligned connector portions.

2. A modular electric wiring system as claimed in Claim 1, wherein the electrical leads are pre-assembled with the associated connector portions at one end.

3. A modular electric wiring system as claimed in Claim 2, wherein the electrical leads have an electrical connector at the other end.

4. A modular electric wiring system as claimed in any one of Claims 1 to 3, wherein the electric contacts are electrically connected to the electrical conductors of the electrical leads prior to electrical connection with the electrical conductors in the rigid portion.

5. A modular electric wiring system as claimed in any one of Claims 1 to 4, wherein the plug-in unit is pre-assembled.

6. A modular electric wiring system as claimed in any one of Claims 1 to 5, wherein the rigid portion is moulded from plastics material.

7. A modular electric wiring system as claimed in Claim 6, wherein the connector portions on the rigid portion are integrally moulded with the rigid portion.
